(19) Europäisches Patentamt
European Patent Office
Office européen des brevets

(11) **EP 3 749 100 B1**

(12) **EUROPEAN PATENT SPECIFICATION**

(45) Date of publication and mention
of the grant of the patent:
**08.09.2021 Bulletin 2021/36**

(51) Int Cl.:
*A23D 7/00* (2006.01)          *A23D 7/005* (2006.01)
*A23L 27/60* (2016.01)          *A23L 33/105* (2016.01)

(21) Application number: **19701108.3**

(22) Date of filing: **22.01.2019**

(86) International application number:
**PCT/EP2019/051443**

(87) International publication number:
**WO 2019/154617 (15.08.2019 Gazette 2019/33)**

(54) **OIL-IN WATER- EMULSIFIED FOOD COMPOSITION WITH MULBERRY EXTRACT**

EMULGIERTE ÖL-IN-WASSER-NAHRUNGSMITTELZUSAMMENSETZUNG MIT
MAULBEEREXTRAKT

COMPOSITION D'ALIMENT PAR ÉMULSION HUILE DANS EAU AVEC EXTRAIT DE MÛRIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.02.2018 EP 18155930**

(43) Date of publication of application:
**16.12.2020 Bulletin 2020/51**

(73) Proprietor: **Unilever IP Holdings B.V.**
**3013 AL Rotterdam (NL)**

(72) Inventors:
• **ERMACORA, Alessia**
**3133 AT Vlaardingen (NL)**
• **SILVA PAES, Sabrina**
**3133 AT Vlaardingen (NL)**
• **VERHOEF, Petra**
**3133 AT Vlaardingen (NL)**

(74) Representative: **Fijnvandraat, Arnoldus et al**
**Unilever N.V.**
**Unilever Patent Group**
**Bronland 14**
**6708 WH Wageningen (NL)**

(56) References cited:
**KR-A- 20110 119 982      PL-B1- 227 523**

• **LEE MI-HYUN ET AL: "Effect of Mulberry Powder
on Quality Characteristics and Oxidative Stability
of Mayonnaise prepared with Perilla Oil", THE
KOREAN JOURNAL OF FOOD AND NUTRITION,
KOREAN INTELLECTUAL PROPERTY OFFICE,
vol. 27, no. 6, 31 December 2014 (2014-12-31),
pages 1132-1140, XP053033153, ISSN: 1225-4339
cited in the application**
• **SÁNCHES-SALCEDO, MENA,
GARCIÁ-VIGUERA, HERNÁNDEZ, MARTÍNEZ:
"(Poly)phenolic compounds and antioxidant
activity of white (Morus alba) and black (Morus
nigra) mulberry leaves: Their potential for new
products rich in phytochemicals", JOURNAL OF
FUNCTIONAL FOODS, vol. 18, 2015, pages
1039-1046, XP002782855, cited in the application**
• **ZHISHEN, MENGCHENG, JIANMING: "The
determination of flavonoid contents in mulberry
and their scavenging effects on superoxide
radicals", FOOD CHEMISTRY, vol. 64, 1999,
pages 555-559, XP002782846, cited in the
application**
• **KHAN ET AL.: "A comparative study on the
antioxidant activity of methanolic extract from
different parts of Morus alba L. (Moraceae)", BMC
RESEARCH NOTES, vol. 6, no. 24, 2013,
XP002782856, cited in the application**

**EP 3 749 100 B1**

• GHORBANI GORJI SARA ET AL: "Lipid oxidation in mayonnaise and the role of natural antioxidants: A review", TRENDS IN FOOD SCIENCE AND TECHNOLOGY, ELSEVIER SCIENCE PUBLISHERS, GB, vol. 56, 9 August 2016 (2016-08-09), pages 88-102, XP029737960, ISSN: 0924-2244, DOI: 10.1016/J.TIFS.2016.08.002

## Description

The present invention relates to an oil-in-water emulsified food composition, comprising mulberry extract. It further relates to a method to prepare said food composition and to the use of mulberry extract to provide reduced oxidation in an oil-in-water emulsified food composition.

## Background of the invention

Dressing compositions, such as mayonnaise, comprise oil which is prone to oxidation when in contact with oxygen, resulting in an off taste and off color to the dressing composition. To counter such undesired oxidation effects, ethylenediaminetetraacetic acid (EDTA) is commonly used, to chelate transition metal ions, which are known to enhance the oxidation process.

There is a trend to produce food products as natural as possible, wherein added chemicals are avoided or reduced where possible. Despite its superb oxidation inhibitory effect, the use of EDTA is not always favored. A need remains for satisfying alternatives for EDTA which are derived from natural sources, which can at least partly replace EDTA. Although some results have been achieved in this area, such alternatives have their own drawbacks, depending on the food product wherein they are used. Such compositions may come with sensorial disadvantages. The color, taste, and texture of the resulting food product may not sufficiently resemble the food product without the anti-oxidative agent.

WO2017/001154 discloses an antioxidant system free of EDTA without undesired color and considered natural. The system is based on caramel and phenolic compounds.

Lee et al., Korean J. Food Nutr. Vol. 27. No. 6, 1132~1140 (2014) analyses the oxidative stability of mayonnaise prepared with perilla oil, to which mulberry extract was added. The pH of the perilla mayonnaises was 5.54-5.86. This study shows that antioxidant scores increase with mulberry extract levels of 1, 2, 3, 4, and 5%, wherein the highest appearance and sensorial acceptability was reached at 4% and the lowest at 1%.

KR 2011 0119982 discloses a composition including mulberry powder and a production method thereof. The method comprises adding 15-20 part of mayonnaise by weight, and stirring the mixture for 2-5 minutes; adding 0.1-1.5 parts of mulberry powder by weight into the mixture and stirring the mixture for 2-5 minutes; and adding 7-13 parts of lemon juice by weight into the mixture, and stirring the mixture for 1-3 minutes.

Journal of functional foods 18 (2015) 1039-1046 discloses a study on (poly)phenolic compounds and antioxidant activity of white (Morus alba) and black (Morus nigra) mulberry leaves: Their potential for new products rich in phytochemicals.

Food chemistry 64 (1999) 555-559 discloses a study on the determination of flavonoid contents in mulberry and their scavenging effect on superoxide radicals.

Khan et al. BMC research notes 2013,6:24 discloses a comparative study on the antioxidant activity of methanolic extracts from different parts of Morus alba L. (Moraceae).

It is well known in the art of industrial food production, that the sensorial acceptability highly depends on the interaction of the total of ingredients in the compositions and the type of ingredients used. In this context, it was noticed, that the composition of commercial oil-in-water emulsions, like mayonnaises, comprise a specific blend of oil and (organic) acids and pH level, attributing a specific organoleptic profile to the consumer, including flavour and texture, having its specific oxidation dynamics, in addition to its sensitivity for off-colour.

## Summary of the invention

The problem therefore remains to provide an oil-in-water-emulsified food composition, such as a mayonnaise composition, comprising vegetable oil, wherein the sensitivity for oil oxidation is reduced and the organoleptic qualities including texture, color and taste are preferably resembling that of corresponding freshly prepared food products to a commercially acceptable level. Such a food composition contains preferably a reduced level of EDTA or is preferably free of EDTA.

Surprisingly, this problem was solved, at least partly, with an oil-in-water emulsified food composition comprising:

- Vegetable oil,
- Water,
- Extract of *Morus alba* in an amount of 0.01 to 1.5 wt%, expressed as dry weight of extract on weight of total food composition,
- Acid,

wherein the extract of *Morus alba* comprises polyphenols in a total amount of from 0.6 to 15 GAE% ("gallic acid equivalents"), preferably of 1 to 15 GAE %, based on the dry weight of the extract, wherein the pH of the food composition is from 2.5 to 5.

In another aspect, the invention relates to a method to manufacture a food composition, the method comprising the steps of

a) adding water into a stirred vessel,
b) adding the oil to the water while stirring to create a mixture;
c) combining acid and from 0.01 to 1.5 wt% (expressed as dry weight of the extract based on weight of final resulting composition) of extract of *Morus alba* with the water in step a), or with the mixture during step b), wherein the extract of *Morus alba* comprises polyphenols in a total amount of from 0.6 to 15 GAE%, preferably of 1 to 15 GAE %, based on the dry weight of the extract.
d) homogenising the mixture resulting from step b),

to create an oil-in-water emulsion.

In a further aspect, the invention relates to the use of an extract of *Morus alba* in an amount of from 0.01 to 1.5 wt% in oil-in-water emulsions comprising vegetable oil, water and acid, to reduce oxidation, wherein the *Morus alba* extract comprises total polyphenols in a total amount of from 0.6 to 15 wt%, preferably from 2 to 4 wt%, based on the dry weight of the extract.

**Detailed description**

All percentages, unless otherwise stated, refer to the percentage by weight (wt%).

"Weight ratio" means that the concentration of a first (class of) compound(s) is divided by the concentration of a second (class of) compound(s), and multiplied by 100 in order to arrive at a percentage.

"Spoonable" means that a composition is semi-solid but not free-flowing on a time scale typical for eating a meal, meaning not free-flowing within a time period of an hour. A sample of such substance is able to be dipped with a spoon from a container containing the composition. Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

The invention provides a food product as defined in the first aspect above.

Emulsion

The composition of the invention is in the form of an oil-in-water emulsion. Examples of oil-in-water emulsions encompassed by the present invention include emulsified sauces, such as mayonnaise, and dressings, such as salad dressings and vinaigrettes. Preferably, the food composition is an emulsified sauce or dressing, preferably a mayonnaise, a salad dressing or a vinaigrette, and most preferably is a mayonnaise. Generally, a mayonnaise is spoonable, while a salad dressing or a vinaigrette is pourable. A vinaigrette traditionally is a mixture of vegetable oil and a vinegar, and may be a stable oil-in-water emulsion.

In the context of the present invention, the preferred oil-in-water emulsion may be stable as an emulsion during a time period of for example less than one hour (like for example some vinaigrettes). It is preferred that (after emulsifying) the emulsion is stable for more than one hour, preferably during a time period of half a year or more (like for example some mayonnaises).

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having oil levels lower than defined in a standard of identity or not containing egg yolk can be considered to be mayonnaises in the context of the present invention. This kind of products may contain thickeners like starch to stabilise the aqueous phase. Mayonnaises may vary in colour, and are generally white, cream-coloured, or pale yellow. The texture may range from light creamy to thick. Generally, mayonnaise is spoonable. In the context of the present invention "mayonnaise" includes such mayonnaise and 'mayonnaise-like' emulsions with vegetable oil levels ranging from 5% to 85% by weight of the product. Mayonnaises in the context of the present invention do not necessarily need to conform to a standard of identity in any country.

Oil

The term "oil" as used herein refers to lipids selected from triglycerides, diglycerides, monoglycerides and combinations thereof. Preferably the oil in the context of this invention, the vegetable oil, comprises at least 90 wt% of triglycerides, more preferably at least 95 wt%. Preferably the oil contains less than 20 wt% of solid oil at 5°C, preferably less than 10 wt% solid oil. More preferred the oil is free from solid oil at 5°C. Most preferred the oil is liquid at 5°C. Preferred oils for use in the context of this invention are vegetable oils which are liquid at 5°C. Preferably the oil comprises sunflower oil, rapeseed oil, olive oil, soybean oil, and combinations of these oils. Therefore, preferably the vegetable oil is an edible oil. The oil preferably comprises mono unsaturated and/or poly unsaturated fatty acids. The mono-unsaturated fatty acids as comprised in the oil preferably comprise oleic acid. The polyunsaturated fatty acids as comprised in the oil preferably comprise linoleic acid and linolenic acid. Preferably the amount of extra virgin olive oil in the composition of the invention is maximally 40% by weight of the composition. More preferably the amount of extra virgin olive oil in the composition of the invention is maximally 20% by weight of the composition, more preferred maximally 15% by weight of the composition. Preferably the amount of olive oil in the composition of the invention is maximally 20% by weight of the composition, more preferred maximally 15% by weight of the composition more preferred maximally 10% by weight of the composition.

Preferably the concentration of vegetable oil ranges from 5 to 85 wt%, preferably from 10% to 80% by weight, more preferably of from 10 to 78 wt%, even more preferably of from 20 to 70 wt%, based on the weight of the composition. Preferably the amount of vegetable oil is at least 5 wt%, more preferably at least 20% by weight, preferably at least 25% by weight. Preferably the concentration of vegetable oil is maximally 80 wt%, more preferably at most 78 wt% even more preferably at most 70% by weight, preferably maximally 65% by weight, preferably maximally 45%. Any combination of ranges using these mentioned end points are considered to be part of the invention as well.

Water

The composition of the invention comprises water. The total amount of water is preferably of from 15 to 95 wt%, preferably of from 17 to 90 wt%. It can be preferred that water is present in an amount of from 20 to 85 wt%, preferably in an amount of from 22 to 80 wt%. Preferably the amount of water is at least 15 wt%, more preferably at least 17% by weight, even more preferably at least 20%, more preferably at least 22 wt%, even more preferably at least 40 wt% or even 55 wt% by weight. Preferably the concentration of water is maximally 95 wt%, more preferably at most 90 wt%, even more preferably at most 85 wt% more preferably at most 80 wt% even more preferably at most more 75 wt%. Any combination of ranges using these mentioned end points are considered to be part of the invention as well.

Emulsifier

Preferably the composition of the invention comprises an oil-in-water emulsifier. The emulsifier serves to disperse oil droplets in the continuous aqueous phase of an oil-in-water emulsion. Preferably the emulsifier comprises an oil-in-water emulsifier originating from egg, preferably from egg yolk. Preferably the composition comprises egg yolk. This suitably serves as an ingredient which also provides the oil-in-water emulsifier. The presence of egg yolk may be beneficial for taste, emulsification and/or stability of the oil droplets in the composition of the invention. Egg yolk contains phospholipids, which act as emulsifier for the oil droplets. Preferably the concentration of egg yolk in the composition of the invention ranges from 1% to 10% by weight of the composition, more preferred from 2% to 8% by weight of the composition, even more preferably from 2.5% to 6% by weight of the composition. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably the concentration of phospholipids originating from egg yolk ranges from 0.08% to 0.8% by weight, preferably from 0.2% to 0.5% by weight of the food product.

Alternatively, or in addition to the egg-derived emulsifier, the composition of the invention may comprise an oil-in-water emulsifier that does not originate from egg or egg yolk. Preferably such oil-in-water emulsifier is from plant or botanical origin, and may be used native or modified. This way a vegan oil-in-water emulsifier can be created without ingredients from animal origin. Preferably the oil-in-water emulsifier comprises starch sodium octenyl succinate (European food additive E1450). This emulsifier is available commercially as for example N-creamer 46, ex Ingredion Inc. (Westchester, IL, USA). Another preferred emulsifier from botanical origin is legume protein.

Acid and pH

The composition of the invention has a pH ranging from 2.5 to 5, preferably ranging from 2.5 to 4.

The total amount of acid in the composition can be determined by titration with sodium hydroxide (NaOH), and expressed as titratable acidity. This is called the titratable acidity, expressed as acetic acid (HAc), which is determined using the following formula.

$$HAc\% = 100\% \cdot (V \cdot t \cdot M)/m \qquad (1)$$

wherein:

V: volume NaOH solution added (mL)
t: concentration NaOH solution (mol/L)
M: molecular weight HAc (60.052 g/mol)
m: mass (g) product which has been titrated

Preferably the acid comprises organic acid. More preferably, the acid is organic acid. Preferably, the organic acid comprises an acid selected from the group consisting of acetic acid, citric acid, malic acid, lactic acid, succinic acid, formic acid, propionic acid, ascorbic acid, salts thereof and mixtures thereof. Preferably the acid is selected from the group consisting of acetic acid, citric acid, malic acid, lactic acid, succinic acid, salts thereof and mixtures thereof. It is more preferred that the composition comprises acetic acid and salts thereof. Preferably the composition of the invention has a total titratable acidity ranging from 0.03% to 3% by weight expressed as acetic acid, preferably from 0.05% to 2% by weight, preferably from 0.1% to 1% by weight. Acetic acid is preferably present in an amount of more than 50 wt%, more preferably more than 80 wt%, even more preferably more than 90 wt%, even more preferably more than 95 wt% based on the weight of the total amount of acid in the composition.

Preferably, the composition comprises one or more organic acids other than acetic acid, such as preferably selected from the group consisting of citric acid, malic acid, lactic acid, succinic acid, propionic acid, ascorbic acid, salts and mixtures thereof, at a total concentration (all organic acids not being acetic acid taken together) ranging from 0.002% to 0.12% by weight of the composition. Such acids could preferably originate from or be added via vinegar.

Preferably the composition comprises one or more organic acids other than acetic acid at a concentration of such an acid ranging from 0.01% to 0.09% by weight of the composition, more preferred from 0.02% to 0.085% by weight, more preferred from 0.03% to 0.08% by weight, and most preferred from 0.04% to 0.08% by weight.

It can be preferred that the composition comprises acetic acid and one or more acids selected from the group consisting of citric acid, malic acid, lactic acid, succinic acid and mixtures thereof.

The acids as described in this specification include their corresponding salts which are in equilibrium with the acids (acetates, citrates, malates, lactates, succinates, etc.). In case a concentration of an acid is provided, then this concentration refers to total concentration of the acid and its corresponding salt.


Mulberry extract

The oil-in-water emulsified food product of the present invention comprises *Morus alba* extract in an amount of from 0.01 to 1.5%, more preferably comprises from 0.05 to 1%, even more preferably from 0.1 to 0.7%, even more preferably of from 0.2 to 0.5 %, expressed as dry weight of the extract based on the weight of the emulsified food composition. In salad dressings, the amount is preferably of from 0.01 to 1.5 wt%. In a mayonnaise, the amount is preferably of from 0.01 to 0.7 wt%. The term *'Morus alba* extract' as used herein refers to a composition that has been isolated from *Morus alba* extract fruit, leave or root. Typically, the *Morus alba* extract does not contain insoluble parts such as seeds or peel. Mulberry extract, and in particular *Morus alba extract,* is defined as the extract as such. For example, without additional processing aids such as for example maltodextrins or sugars.

Mulberry, *Morus,* is a genus of flowering plants in the family Moraceae, and comprises ten to sixteen species of deciduous trees commonly known as mulberries, growing wild and under cultivation in many temperate world regions. The following species are accepted by the Kew Plant List as of August 2015: *Morus alba L., Morus australis Poir., Morus cathayana Hemsl., Morus celtidifolia Kunth, Morus indica - L., Morus insignis, Morus japonica Audib., Morus liboensis S.S. Chang, Morus macroura Miq., Morus mesozygia Stapf, Morus mongolica (Bureau) C.K. Schneid., Morus nigra L., Morus notabilis C.K. Schneid., Morus rubra L., Morus serrata Roxb., Morus trilobata (S.S. Chang), Morus wittiorum Hand.-Mazz.*

KR20110072769 describes a mulberry sauce containing mulberry fruit extract. In the present invention the mulberry extract is obtained from the fruit, leaves or root, preferably of the fruit, of the species *Morus alba.* Most preferably, the mulberry extract is obtained from the white fruit of the *Morus alba.*

The mulberry extract in the emulsified food composition of the invention (the *Morus alba* extract) is preferably selected from extract of fruit, leaves, root and combinations thereof, preferably the *Morus alba* extract is *Morus alba* fruit extract. *Morus alba* extract is preferably applied in dried form, more preferably in dried, ground form. The *Morus alba* extract that is employed in accordance with the present invention can be a solid product, a paste or a liquid. Preferably, the *Morus alba* extract is a dry solid product, preferably a powder.

In the present invention, the preferred *Morus alba* extract extract is a *Morus alba* fruit extract. It may be preferred that the extract is an aqueous *Morus alba* fruit extract, more preferably the extract is a dried extract obtained from an aqueous *Morus alba* fruit extract.

Preferably at least 80 wt.% of the dry matter of the *Morus alba* extract, preferably obtained from an aqueous *Morus alba* extract, preferably of a *Morus alba* fruit extract, dissolves when the material is added to demineralized water at a temperature of 20°C in a concentration providing 20 gram of dry matter per litre. The *Morus alba* extract is preferably a dried aqueous extract of mulberry fruit.

Preferably, the *Morus alba* extract has a water content of less than 15 wt.%, more preferably of less than 10 wt.% and most preferably of less than 8 wt.%.

A dried mulberry extract, preferably a mulberry fruit extract, obtained from an aqueous mulberry extract, or mulberry fruit extract respectively, which can be used in accordance with the present invention, may suitably be obtained as follows: dried mulberry fruit, root or leave, preferably fruit, is sliced, extracted with water, filtered and concentrated, and finally dried (e.g. by spray-drying) into fine powder. No excipient needs to be used during such spray-drying process, resulting in a final product with a dried mulberry material to dried extract ratio of e.g. 10:1.

The mulberry extract that is employed in accordance with the present invention preferably has the following dry matter composition:

- 10-40 wt.% amino acids (including amino acid residues contained in peptides and proteins);
- 7-28 wt.% organic compounds with an acidic function other than amino acids;
- 11-44 wt.% carbohydrates.

To this end, the composition of the invention preferably contains DNA and/or RNA of *Morus alba.*

In the composition of the invention the mulberry extract is preferably dissolved in the water. According to the invention, it was found that the total amount of polyphenols in the mulberry extract is from 0.6 GAE% ("gallic acid equivalents") to 15 GAE%, more preferably from 1 to 15 GAE%, more preferably from 0.6 to 10 GAE%, even more preferably of from 0.6 to 6 GAE%, more preferably from 1.5 to 6 GAE%, even more preferably of from 2 to 4 GAE%. A common method to determine the phenolic compounds concentration of a sample, is the concentration in "gallic acid equivalents" (GAE). Whenever reference is made herein to "gallic acid equivalents" what is meant is the amount of gallic acid equivalents as determined by the Folin-Ciocalteu assay, as known in the art. Gallic acid (3,4,5-trihydroxybenzoic acid) is the phenolic acid that is used as a standard for determining the phenol content of various analyses by the Folin-Ciocalteu assay (see V.L. Singleton et al., Analysis of total phenols and other oxidation substrates and antioxidants by means of Folin-Ciocalteu reagent, Methods in Enzymology 299, 152-178, 1999).

The mulberry extract as used in the composition of the invention preferably comprises total free amino acids in an amount of more than 3 mg/g, based on the dry weight of the extract. Preferably from 3 to 150 mg/g, even more preferably of from 50 to 120 mg/g, even more preferably of from 70 to 100 mg/g, even more preferably of from 80 to 100 mg/g, based on the dry weight of the extract.

The mulberry extract as used in the composition of the invention preferably comprises organic acids in a total amount of from 17 to 200 mg/g, preferably of from 40 to 200 mg/g, preferably from 80 to 180, even more preferably of from 120 to 160 mg/g based on the dry weight of the extract. Organic acid is understood here as acetic acid, citric acid, malic acid, lactic acid, succinic acid, formic acid, propionic acid, ascorbic acid, salts thereof, and mixtures thereof. It is particularly preferred, when the extract of *Morus alba* comprises organic acids in a total amount of from 17 to 200 mg/g, preferably of from 40 to 200 mg/g, preferably from 80 to 180, even more preferably of from 120 to 160 mg/g based on the dry weight of the extract and from 0.6 to 15 GAE%, more preferably from 1 to 15 GAE%, even more preferably from 0.6 to 10 GAE%, even more preferably of from 0.6 to 6 GAE%, more preferably of from 1.5 to 6 GAE%, even more preferably of from 2 to 4 GAE%, based on the dry weight of the *Morus alba* extract.

The mulberry extract as used in the composition of the invention preferably comprises citric acid and salts thereof in an amount of more than 20 wt%, based on the weight of total organic acids in the extract. A most preferred amount is from 65 to 85 wt% based on the weight of total organic acids in the extract. Organic acid is understood here as acetic acid, citric acid, malic acid, lactic acid, succinic acid, formic acid, propionic acid, ascorbic acid, salts thereof and mixtures thereof.

The mulberry extract as used in the composition of the invention preferably comprises from 1 to 100, preferably from 40 to 60 mg/g of quinic acid and salts thereof, based on the dry weight of the *Morus alba* extract.

Amounts of total amino acids, organic acids, citric and quinic acid can for example be determined by NMR analysis, as known in the art, and specified in the example section herein.

Color variations are not appreciated by some consumers. It is a preference, and a preferred advantage of the invention, that the food composition has a color that is not too different from the color of the product without mulberry extract. Color can be measured as known in the art according to a CIE L*a*b* scale. In particular, compositions are preferred having a L*a*b* color value of the *Morus alba* extract, measured at 0.1% of the extract in water, wherein the L* value of a 0.1 % w/w aqueous solution of the extract is higher than 80, preferably from 80 to 92, more preferably is from 88 to 90. The b* value is preferably more than 1, preferably of between 1 and 30, even more preferably of between 2 and 20, most preferably of between 4 and 12. Such L* values and b* values, preferably the combination of such L* and b* values of the extract provide food compositions according to the invention, especially mayonnaise compositions, which most resemble, with respect to color, the food compositions without the *Morus alba* extract.

L* for mayonnaise compositions according to the invention is preferably of from 50 to 95, preferably of from 70 to 95, even more preferably of from 80 to 92, most preferably of from 85 to 92. The difference in color ΔE between the colour of a composition with and without the *Morus alba* extract is calculated as follows $\Delta E^* = SQRT(\Delta L^{*2} + \Delta a^{*2} + \Delta b^{*2})$. The difference in color ΔE is preferably of from 0 to 30, more preferably of from 0 to 20, even more preferably of from 0 to 10 and most preferably of from 0 to 5. These maximum differences in color ΔE are especially desired and preferred if the product is a mayonnaise or a salad dressing, but are not limited to these types of food product.

Hence, preferably the *Morus alba* extract comprises

- total polyphenols in an amount of from 0.6 to 15 GAE%, preferably of from 1 to 15 GAE%, even more preferably of from 1 to 10 GAE%, even more preferably of from 1.5 to 6 GAE%, most preferably of from 2 to 4 GAE%, based on the dry weight of the *Morus alba* extract
- total free amino acids in an amount of from 3 to 150 mg/g, even more preferably of from 50 to 120 mg/g, even more preferably of from 70 to 100 mg/g, even more preferably of from 80 to 100 mg/g, based on the dry weight of the *Morus alba* extract.
- total organic acids in an amount of from 17 to 200 mg/g, preferably of from 40 to 200 mg/g, preferably of from 80 to 180 mg/g more preferably of from 120 to 160 mg/g, based on the dry weight of the *Morus alba* extract, wherein organic acid is understood here as acetic acid, citric acid, malic acid, lactic acid, succinic acid, formic acid propionic acid, ascorbic acid, salts thereof and mixtures thereof, and

wherein the *Morus alba* extract has an L*a*b* value when measured in a 0.1 % w/w aqueous solution wherein the L* value is higher than 80, preferably from 80 to 92, more preferably is from 88 to 90 and the b* value is preferably more than 1, preferably of between 1 and 30, even more preferably of between 4 and 12.

In this extract it is preferred that quinic acid is present in an amount of from 1 to 100, preferably from 40 to 60 mg/g and salts thereof based on the dry weight of the *Morus alba* extract.

Other ingredients

The composition of the invention preferably contains additionally other ingredients than already specifically mentioned in here. Preferably the composition contains plant material in the form of herbs and/or spices. In case such ingredients are present in the composition, then generally their total concentration is at least 0.1% by weight, and preferably maximally 10% by weight, preferably maximally 5% by weight.

The composition of the invention may comprise sugar, but high levels are not desired. Sugar may be present to an amount of from 0.1 to 15 wt%, preferably of from 0.3 to 6 wt%, even more preferably of from 0.4 to 5 wt%, most preferably of from 0.5 to 4 wt%, based on the weight of the composition.

Total alkaline metal salt, for example sodium chloride, may be present to an extent of from 0.1 to 5 wt%, preferably from 0.15 to 4 wt%, or more preferably of from 0.2 to 3 wt%, based on the weight of the composition.

The food composition of the invention may comprise a thickener. It may be preferred that the food composition comprises a thickener such as a hydrocolloid thickener. Therefore, the food composition may preferably comprise starch or gum or mixtures thereof. A preferred gum is xanthan gum. The composition may comprise starch in an amount of from 0.1 to 8 wt%, preferably of from 0.2 to 7 wt%, more preferably of from 0.5 to 6 wt%, or even from 0.5 to 5 wt% can be preferred, based on the weight of the food product. It is preferred, that when starch is present, or gum, the oil content is between 5 and 72 wt%, preferably of between 8 and 70 wt%, preferably of between 10 and 50 wt% based on the weight of the food product. A great advantage of the composition of the invention is that the oxidation of the vegetable oil is strongly reduced as compared to compositions without mulberry extract as defined herein. Therefore, the amount of EDTA which commonly is present in compositions containing vegetable oil can be strongly reduced. In this way a food composition is presented to the consumer, which does not contain compounds which are often regarded to be 'chemical' or 'artificial' by that consumer. Hence, preferably the composition comprises EDTA at a concentration lower than 0.008 wt%, preferably from 0 to 0.007 % by weight, preferably lower than 0.005% by weight, preferably from 0 to 0.005 wt%, preferably lower than 0.002% by weight, preferably from 0 to 0.002 wt% preferably lower than 0.001% by weight, preferably from 0 to 0.001 wt% of the composition. Most preferred EDTA is absent from the composition.

Method for preparation of composition

The compositions of the invention are prepared by any method commonly known for preparing oil-in-water emulsions. Preferably, by using such method, an oil-in-water emulsion is prepared, wherein the oil droplets have a surface weighted mean diameter D3,3 of less than 10 micrometer (see M. Alderliesten, Particle & Particle Systems Characterization 8 (1991) 237-241; for definitions of average diameters).

Accordingly, in a second aspect the present invention provides a method for making an emulsified food composition according to the first aspect of the invention. Preferred compounds and amounts indicated in the first aspect of the invention apply for this aspect as well. The method comprises the steps of:

a) adding water into a stirred vessel,
b) adding oil to the water while stirring to create a mixture;
c) combining acid and 0.01 to 1.5 wt% (expressed as dry weight of the extract based on weight of final resulting composition) of extract of *Morus alba* with the water during step a), or with the mixture during step b), wherein the extract of *Morus alba* comprises polyphenols in a total amount of from 1 to 15 GAE,%, preferably from 2 to 4 GAE,%, based on the dry weight of the extract.
d) homogenising the mixture resulting from step b) to create an oil-in-water emulsion.

The method of the invention comprising homogenisation of a mixture of oil and water. This results in an oil-in-water emulsion. Technology to prepare oil-in-water emulsions is known in the art, e.g. for mayonnaise making. Preferably, water and water soluble ingredients are provided in step a). The acid can be pre-added to the water in step a). Also, the mulberry extract can be added to the water in step a). This water phase is combined with oil in step b). Hence, step c) is not meant to be necessarily applied after step b). Acid and mulberry extract can be added together with the oil to the water if so preferred. Acid can be added as such or, preferably, in the form of vinegar. The water in the composition encompasses the water present in the vinegar, as the amount of water refers to the total water content of the resulting composition. Preferably, oil is slowly added to create a coarse emulsion. The mixture of water and oil, comprising acid and mulberry extract, is then homogenised (step d). A colloid mill could be used to achieve this. Preferably an oil-in-water emulsion results from homogenisation. In the emulsion, the oil droplets preferably have a volume weighted mean droplet size D3,3 of less than 10 micrometer. The amount of *Morus alba* extract is as described for the composition above, and ranges from 0.01 to 1.5 wt%, preferably 0.05 to 1, more preferably of from 0.1 to 0.7 even more preferably of from 0.2 to 0.5 wt% (expressed as dry weight of *Morus alba* extract, based on weight of final resulting composition).

Extract of *Morus alba* is preferably added as a powder, more preferably a powder which has a moisture content of less than 15 wt.%, more preferably of less than 10 wt.% and most preferably of less than 8 wt.%. The powder is preferably dried powder, more preferably is freeze dried powder. If the powder is freeze dried, it preferably has a moisture content of less than 5 wt%.

It is preferred, when in step a) or b) an emulsifier is included, especially in case an emulsion is prepared. The emulsifier is preferably as described above in relation to the product description.

In a third aspect, the present invention relates to the use of extract of *Morus alba* in an amount of from 0.01 to 1.5 wt%, preferably of from 0.05 to 1, more preferably of from 0.1 to 0.5 wt% in an oil-in-water emulsified food composition, preferably a mayonnaise, salad dressing or vinaigrette, the emulsion comprising vegetable oil, water and acid, to reduce oxidation of the food composition, preferably while resembling the color of that emulsified food composition without the mulberry extract. Such extract comprises polyphenols in an amount of from 0.6 to 15 GAE%, preferably from 1 to 15 GAE%, based on the dry weight of the extract.

By this invention, EDTA can be reduced or preferably be replaced from oil-in-water emulsified food products such as in particular mayonnaise, salad dressings or vinaigrettes. Preferably the composition wherein the *Morus alba* extract is used comprises EDTA at a concentration lower than 0.008 wt%, preferably from 0 to 0.007 % by weight, preferably lower than 0.005% by weight, preferably from 0 to 0.005 wt%, preferably lower than 0.002% by weight, preferably from 0 to 0.002 wt% preferably lower than 0.001% by weight, preferably from 0 to 0.001 wt% of the composition. Most preferred EDTA is absent from the composition.

Preferably, the color of the oil-in-water emulsion has a color characterized by the L*a*b* values wherein the difference in color ΔE* between the emulsion comprising the *Morus alba* extract and the emulsion without the extract, calculated as $\Delta E^* = SQRT(\Delta L^{*2} + \Delta a^{*2} + \Delta b^{*2})$, is from 0 to 30.

The invention will now be exemplified by the following, non-limiting examples:

**Examples:**

Raw Materials

- Water: demineralised water.

- Rapeseed oil ex Cargill (Amsterdam, The Netherlands).
- Sugar: sucrose white sugar W4 ex Suiker Unie (Oud Gastel, Netherlands).
- Salt: NaCl suprasel ex Akzo Nobel (Amersfoort, Netherlands).
- EDTA: Ethylenediaminetetraacetic acid, calcium disodium complex, dehydrate; Dissolvine E-CA-10 ex Akzo Nobel (Amersfoort, Netherlands).
- Egg yolk: ex Bouwhuis Enthoven (Raalte, the Netherlands); contains 92% egg yolk and 8% kitchen salt.
- Vinegar spirit 12% ex Kühne (Hamburg, Germany)
- Lemon and Mustard liquid flavour mix
- Sorbic acid, E200

Extracts (dry powders)

Table 1

| Extract 1 | Mulberry extract Draco A | Mulberry fruit, *Morus alba* |
|---|---|---|
| Extract 2 | Xian Lukee Bio-Tech Co., Ltd. (Fruit) | Mulberry fruit, *Morus alba* |
| Extract 3 | Fengi Biotech Co., Ltd. | Mulberry fruit, *Morus alba* |
| Extract 4 | Phyto Planet | Mulberry fruit, *Morus alba* |
| Extract 5 | Baoji Oasier Bio-Tech Co., Ltd. | Mulberry fruit, *Morus alba* |
| Extract 6 | Xian Lukee Bio-Tech Co., Ltd. (Leaf) | Mulberry leaf, *Morus alba* |
| Extract 7 | Longze Biotechnology (Blackberry) | Blackberry fruit |
| Extract 8 | Xian Xuochang Trade Co., Ltd | Mulberry fruit, *Morus alba* |
| Extract 9 | Mulberry extract Draco B | Mulberry fruit, *Morus alba* |

Dry weight can be calculated by the following protocol:

A sample is weighed into an aluminium cup and frozen at -20 °C. The cup is then placed into the freeze dry equipment where a vacuum is created using a vacuum pump. The temperature in the machine is then slowly increasing to 10°C. This will cause water to sublimate from the sample, which is then removed from the cabinet. The total time for this process is about 24 hours. The mass loss expressed as % (m/m) is considered to be the moisture content. The mass residue expressed as % (m/m) is considered to be the dry matter content.

**Example 1**

**Accelerated shelf-life test to follow lipid oxidation in mayonnaise compositions**

Formulations

Table 2.

| | EDTA mayo (POS Ref) | No EDTA (NEG Ref) | 0.1% Mulberry extract | 0.3% Mulberry extract | 0.5% Mulberry extract |
|---|---|---|---|---|---|
| | | | | | |
| Material name | %w/w | %w/w | %w/w | %w/w | %w/w |
| Water | 15.53 | 15.54 | 15.44 | 15.24 | 15.04 |
| Calcium disodium EDTA | 0.0075 | 0 | 0 | 0 | 0 |

(continued)

| Material name | %w/w | %w/w | %w/w | %w/w | %w/w |
|---|---|---|---|---|---|
| Refined oil (rapeseed) | 75 | 75 | 75 | 75 | 75 |
| Sugar (sucrose) | 1.3 | 1.3 | 1.3 | 1.3 | 1.3 |
| Salt (sodium chloride) | 1.03 | 1.03 | 1.03 | 1.03 | 1.03 |
| Vinegar spirit 12% | 2.6 | 2.6 | 2.6 | 2.6 | 2.6 |
| Egg yolk | 4.2 | 4.2 | 4.2 | 4.2 | 4.2 |
| Flavours | 0.24 | 0.24 | 0.24 | 0.24 | 0.24 |
| Sorbic acid, E200 | 0.09 | 0.09 | 0.09 | 0.09 | 0.09 |
| Mulberry fruit extract (Extract 9) | 0 | 0 | 0.1 | 0.3 | 0.5 |

Methods

Mayonnaise compositions as indicated above are subjected to conditions which promote oxidation, without requiring the typical shelf life of 4 to 9 months of mayonnaise. Oxidation experiments are carried out during a period up to maximally 67 days, to follow the oxidation of the vegetable oil in oil-in-water emulsions. Emulsion samples with various compositions are prepared (as described in the examples below) and 1g of each sample is filled in a capped glass vial (20mL volume) and kept in a temperature controlled oven at 50°C. In normal use, products can be stored at lower temperatures, such as in the fridge.

*Oxygen concentration in headspace*

To follow oxidation of fatty acids in emulsions in the experiments, the oxygen concentration is measured in the headspace of closed jars (capped glass vials) in which emulsions are stored to follow oxidation. The lower this concentration, the more oxygen is consumed for oxidation processes. The oxygen content is determined by taking a sample of gas from the headspace with a needle through a septum in the closed lid of the jar. The oxygen concentration in the sample is determined by gas analyser.

Mulberry fruit extract (Draco, Extract 9) was added to a mayonnaise composition comprising 75% refined rapeseed oil, at concentrations of 0.1, 0.3 and 0.5 wt%, based on the weight of the mayonnaise composition. As a positive control the mayonnaise composition contained 0.0075 wt% EDTA. Also, a composition without mulberry extract was used. The pH of the compositions was 3.7-3.8.

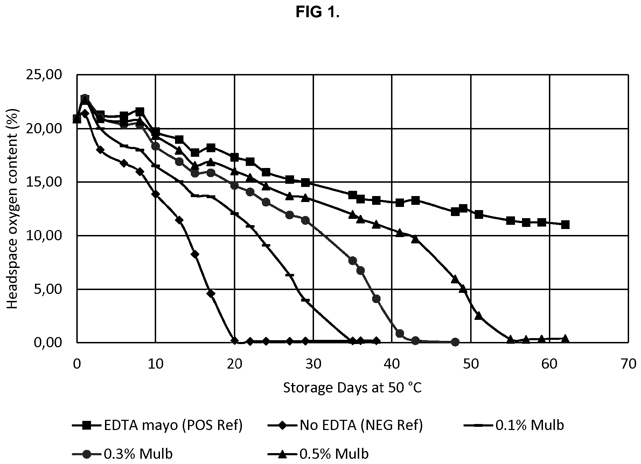

Oxygen consumption in the head space of the jar, indicated as % of present oxygen, is used as the measure for oxidation of the mayonnaise composition. The results are depicted in Figure 1.

Result

Figure 1 shows that in the positive control (EDTA, squares), after 62 days 11.2% of the oxygen is left. The negative control (diamonds) showed that all oxygen was consumed after about 20 days, and the amount of 11% oxygen was already reached after 13 days. The compositions with 0.1, 0.3 and 0.5 wt% mulberry extract (dashes, bullets, triangles, respectively) showed that no oxygen was present anymore after 35, 41 and 55 days respectively. Although the compositions with mulberry extract were not as stable as the control composition comprising EDTA, they showed significantly better results than when no mulberry extract was present. These results were achieved with very low concentrations of mulberry extract, indicating the strong oxidation-inhibitory effect. No off-color of the samples was observed compared to the sample without *Morus alba* extract, as judged by visual assessment.

**Example 2**

**Taste analysis of mayonnaise compositions comprising mulberry extract after storage.**

Compositions

The same compositions were used as in Example 1.

Method

To assess the development of off taste of mayonnaise compositions comprising mulberry extract, the compositions of Example 1 where stored at ambient temperature and tested by a trained tasting panel (5 people) for 3 months of storage. The samples were scored (1) fresh, (2) just acceptable, or (3) off taste. Scores were averaged, and an average score of 1 is fresh, between 1 and 2 is fresh-acceptable, between 2 and 3 is borderline, 3 is off taste.

Result

All five compositions tasted fresh (1) at T0. After one month, the negative reference (no extract) had developed unacceptable off taste (3). After three months, the positive control (EDTA) was still fresh (1). The samples with mulberry extract scored fresh-acceptable. This test indicates that the samples with low levels of mulberry extract remain sufficiently fresh after 3 months of storage when stored at ambient temperature.

**Example 3**

**Inhibition of oxidation for different mulberry extract compositions.**

To assess the differences between various mulberry extracts with regard to their capacity to inhibit oxidation in a mayonnaise composition, seven mulberry extracts were compared, in an amount of 0.25% on the mayonnaise composition. In addition, a blackberry extract (Extract 7, comparative example) was tested and a composition with EDTA (positive control, composition 1), and a composition without EDTA or extract (negative control, composition 2). The mayonnaise compositions were stored at 50 °C, and the oxygen consumption from the headspace of the container was monitored as measure for oxidation, according to the method in example 1.
The compositions are indicated in the table 3 below. The pH of the compositions was 3.7.

Table 3

| formulation | + contr. | - contr. | Extr. 1 | Extr. 2 | Extr. 3 | Extr. 4 | Extr. 5 | Extr. 6 | Extr. 7 | Extr. 8 |
|---|---|---|---|---|---|---|---|---|---|---|
| | %w/w | %w/w | %w/w | %w/w | %w/w | %w/w | %w/w | %w/w | %w/w | %w/w |
| Water | 15.53 | 15.54 | 15.29 | 15.54 | 15.54 | 15.54 | 15.54 | 15.54 | 15.54 | 1554 |
| Calcium disodium EDTA | 0.0075 | 0 | 0 | 0 | 0 | 0 | 0 | 0 | 0 | 0 |
| Refined oil (rapeseed) | 75 | 75 | 75 | 75 | 75 | 75 | 75 | 75 | 75 | 75 |
| Sugar (sucrose) | 1.3 | 1.3 | 1.3 | 1.3 | 1.3 | 1.3 | 1.3 | 1.3 | 1.3 | 1.3 |
| Salt (sodium chloride) | 1.03 | 1.03 | 1.03 | 1.03 | 1.03 | 1.03 | 1.03 | 1.03 | 1.03 | 1.03 |
| Vinegar spirit 12% | 2.6 | 2.6 | 2.6 | 2.6 | 2.6 | 2.6 | 2.6 | 2.6 | 2.6 | 2.6 |
| Egg yolk | 4.2 | 4.2 | 4.2 | 4.2 | 4.2 | 4.2 | 4.2 | 4.2 | 4.2 | 4.2 |
| Flavours | 0.24 | 0.24 | 0.24 | 0.24 | 0.24 | 0.24 | 0.24 | 0.24 | 0.24 | 0.24 |
| Sorbic acid, E200 | 0.09 | 0.09 | 0.09 | 0.09 | 0.09 | 0.09 | 0.09 | 0.09 | 0.09 | 0.09 |
| Extract 1 | 0 | 0 | 0.25 | 0 | 0 | 0 | 0 | 0 | 0 | 0 |
| Extract 2 | 0 | 0 | 0 | 0.25 | 0 | 0 | 0 | 0 | 0 | 0 |
| Extract 3 | 0 | 0 | 0 | 0 | 0.25 | 0 | 0 | 0 | 0 | 0 |
| Extract 4 | 0 | 0 | 0 | 0 | 0 | 0.25 | 0 | 0 | 0 | 0 |

(continued)

| formulation | + contr. | - contr. | Extr. 1 | Extr. 2 | Extr. 3 | Extr. 4 | Extr. 5 | Extr. 6 | Extr. 7 | Extr. 8 |
|---|---|---|---|---|---|---|---|---|---|---|
|  | %w/w | %w/w | %w/w | %w/w | %w/w | %w/w | %w/w | %w/w | %w/w | %w/w |
| Extract 5 | 0 | 0 | 0 | 0 | 0 | 0 | 0.25 | 0 | 0 | 0 |
| Extract 6 | 0 | 0 | 0 | 0 | 0 | 0 | 0 | 0.25 | 0 | 0 |
| Extract 7 | 0 | 0 | 0 | 0 | 0 | 0 | 0 | 0 | 0.25 | 0 |
| Extract 8 | 0 | 0 | 0 | 0 | 0 | 0 | 0 | 0 | 0 | 0.25 |
| Result |  |  | #2 |  | #1 |  | #4/5 | #3 |  | #4/5 |

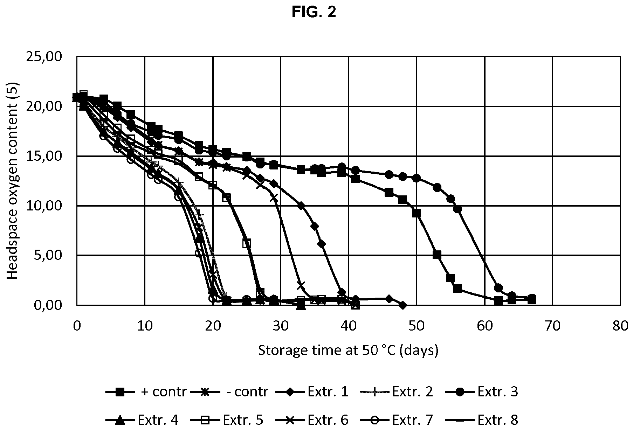

The results have been depicted in Figure 2.

Figure 2 shows that extracts differ with regard to oxidation reduction. Extract 3 showed an antioxidative effect which was stronger than that of the positive control.

Extracts 1 and 6 showed a good antioxidative effect. Extracts 5 and 8 showed acceptable results as well. The other compositions showed a result not very different from the negative control.

**Example 4 Chemical characterisation of the mulberry extracts**

In order to further assess the chemical differences of the mulberry extracts, the compositions were analyzed for the following parameters:

• Total polyphenols,

• Total free amino acids

• Total organic acids (citric acid, malic acid, lactic acid, succinic acid, formic acid, propionic acid, ascorbic acid and salts thereof),

• Citric acid and its salts

• Quinic acid and its salts

• Color

Methods - Phenolic compounds

The concentration of phenolic compounds is expressed as "gallic acid equivalents" (GAE), and determined using the Folin-Ciocalteu assay (see V.L. Singleton et al., Analysis of total phenols and other oxidation substrates and antioxidants by means of Folin-Ciocalteu reagent, Methods in Enzymology 299, 152-178, 1999).

Methods - Organic acids and Free Amino acids

Quantitative analysis of organic acids and free amino acids in various sources of organic acids was carried out spectroscopically ($^1$H-NMR).

200 mg of sample (extracts) was weighed and added with 3 ml of $D_2O$. 600 $\mu$l of such sample mixture was added with 100 $\mu$l of CSI (Chemical Shift Indicator) solution (consisting of 10.90 mg of 3-(trimethylsilyl)propionic-2,2,3,3-d$_4$ acid, sodium salt, 2.30 mg of difluorotrimethyl-silanyl-methyl)phosphonic acid and 30 ml of $D_2O$), 100 $\mu$l of EDTA-d$_{12}$ solution, and 300 $\mu$l of 0.2 M phosphate buffer. The sample mixture was homogenised and centrifuged at 15000 g for 10 minutes. 650 $\mu$l of the supernatant was transferred into 5-mm NMR tubes for analysis.

1D $^1$H NMR spectra were recorded with a noesygppr1d pulse sequence on a Bruker Avance III 600 NMR spectrometer, equipped with a 5-mm cryo-probe. The probe was tuned to detect $^1$H resonances at 600.25 MHz. The internal probe temperature was set to 298K. 128 scans were collected in 57K data points with a relaxation delay of 10 seconds, an acquisition time of 4 seconds and a mixing time of 100 ms. Low power water suppression (16 Hz) was applied for 0.99 seconds. The data were processed in Topspin software version 3.5 pl 1 (Bruker BioSpin GmbH, Rheinstetten, Germany). An exponential window function was applied to the free induction decay (FID) with a line-broadening factor of 0.15 Hz prior to the Fourier transformation. Manual phase correction and baseline correction was applied to all spectra. The spectra were referenced against the methyl signal of 3-(trimethylsilyl)propionic-2,2,3,3-$d_4$ acid, sodium salt ($\delta$ 0.0 ppm).

Method citric acid, quinic acid

Same method as for organic acids described above.

Results polyphenols

The total polyphenol values, expressed as GAE,%, of the tested extracts were:

Table 4. (ND = not done)

| Extract name | | GAE, % | Oxidation reduction |
|---|---|---|---|
| Mulberry extract Draco A | Extract 1 | 3.37 | #2 |
| Xian Lukee Bio-Tech Co., Ltd. (Fruit) | Extract 2 | 0.49 | |
| Fengi Biotech Co., Ltd. | Extract 3 | 13.00 | #1 |
| Phyto Planet | Extract 4 | 0.40 | |
| Baoji Oasier Bio-Tech Co., Ltd. | Extract 5 | 0.65 | #4/5 |
| Xian Lukee Bio-Tech Co., Ltd.(Leaf) | Extract 6 | 2.80 | #3 |
| Longze Biotechnology (Blackberry) | Extract 7 | 0.85 | |
| Xian Xuochang Trade Co., Ltd. | Extract 8 | 1.00 | #4/5 |
| Mulberry extract Draco B | Extract 9 | 2.08 | ND |

Extracts 1, 3, 5, 6, 8, 9 showed the highest total polyphenol content. The result of example 3, oxidation reduction, have been indicated for comparison. The experiment shows that good oxidation inhibition was obtained with a low concentration of *Morus alba* extracts (0.25%) wherein the extracts have a total polyphenol level of above 0.6% GAE.

Results total free amino acid content.

Total free amino acid content was assessed by NMR analysis. The results are indicated in the table 5 below. It was found that the extracts 1, 3, 6, and 9 showed the highest levels of total free amino acids.

Table 5

| Extract name | | mg/g | Oxidation reduction |
|---|---|---|---|
| Mulberry extract Draco A | Extract 1 | 89.31 | #2 |
| Xian Lukee Bio-Tech Co., Ltd. (Fruit) | Extract 2 | 2.65 | |
| Fengi Biotech Co., Ltd. | Extract 3 | 3.40 | #1 |
| Phyto Planet | Extract 4 | 1.49 | |
| Baoji Oasier Bio-Tech Co., Ltd. | Extract 5 | ND | #4/5 |
| Xian Lukee Bio-Tech Co., Ltd.(Leaf) | Extract 6 | 71.34 | #3 |
| Longze Biotechnology (Blackberry) | Extract 7 | ND | |
| Xian Xuochang Trade Co., Ltd. | Extract 8 | 0.95 | #4/5 |
| Mulberry extract Draco B | Extract 9 | 93.24 | ND |

Total amount of organic acids

The total amount of organic acids (mg/g extract) was assessed by NMR analysis. Total amount means here citric acid, malic acid, lactic acid, formic acid, succinic acid, propionic acid, ascorbic acid and salts thereof. The level of citric acid (based on total amount of organic acid) (mg/g extract, based on dry weight of the extract) was assessed as well. The results are indicated below in table 6. The highest levels of total organic acid were found in extracts 1, 6 and 9, extracts 2, 5 and showing a lower level, and extracts 3, 4 and 7 showed the lowest levels. The result of example 3, oxidation reduction, have been indicated for comparison.

Table 6

| Extract name | | TOTAL mg/g | Citric acid % | Oxidation reduction |
|---|---|---|---|---|
| Mulberry extract Draco A | Extract 1 | 152.92 | 66.42 | #2 |
| Xian Lukee Bio-Tech Co., Ltd. (Fruit) | Extract 2 | 20.12 | 4.38 | |
| Fengi Biotech Co., Ltd. | Extract 3 | 14.07 | 45.97 | #1 |
| Phyto Planet | Extract 4 | 5.23 | 8.84 | |
| Baoji Oasier Bio-Tech Co., Ltd. | Extract 5 | 19.64 | 59.04 | #4/5 |
| Xian Lukee Bio-Tech Co., Ltd.(Leaf) | Extract 6 | 48.45 | 23.62 | #3 |
| Longze Biotechnology (Blackberry) | Extract 7 | 13.97 | 83.76 | |
| Xian Xuochang Trade Co., Ltd. | Extract 8 | 19.51 | 64.05 | #4/5 |
| Mulberry extract Draco B | Extract 9 | 130.33 | 84.57% | ND |

Quinic acid

The total amount of quinic acid (quinate) was assessed by NMR analysis. The results are indicated below in table 7. Quinic acid (mg/g extract, based on dry weight of the extract) was highest in extracts 1 and 9. The result of example 3, oxidation reduction, have been indicated for comparison.

Table 7

| Extract name | | Quinate mg/g | Oxidation reduction |
|---|---|---|---|
| Mulberry extract Draco A | Extract 1 | 53.36 | #2 |
| Xian Lukee Bio-Tech Co., Ltd. (Fruit) | Extract 2 | 1.37 | |
| Fengi Biotech Co., Ltd. | Extract 3 | 1.43 | #1 |
| Phyto Planet | Extract 4 | 1.24 | |
| Baoji Oasier Bio-Tech Co., Ltd. | Extract 5 | ND | #4/5 |
| Xian Lukee Bio-Tech Co., Ltd.(Leaf) | Extract 6 | ND | #3 |
| Longze Biotechnology (Blackberry) | Extract 7 | 0.82 | |
| Xian Xuochang Trade Co., Ltd. | Extract 8 | 1.11 | #4/5 |
| Mulberry extract Draco B | Extract 9 | 42.23 | ND |

Color

Method

To assess the color effect of the mulberry extracts on mayonnaise compositions, the L*a*b* values were measured of the mayonnaise compositions of Example 2, comprising 0.25 wt% extract using a Hunterlab LabScan XE colorimeter. The color was expressed as L*a*b values, wherein L* indicates the lightness (L* = 0 yields black and L* = 100 indicates diffuse white), a* the green/red coordinate and b* is the yellow/blue coordinate, as known in the art. The difference in color ΔE between the color of the mayonnaise with *Morus alba* extract and without extract is calculated as $\Delta E^* = SQRT(\Delta L^{*2} + \Delta a^{*2} + \Delta b^{*2})$. The results are indicated in table 8. Extracts 1, 4, 5, 6 and 8 provided the smallest differences in the mayonnaise compositions.

Table 8

| Mulberry extract used | Extract number | L* | a* | b* | ΔE | Oxidation reduction |
|---|---|---|---|---|---|---|
| Mulberry extract Draco A | Extract 1 | 88.54 | 4.95 | 25.33 | 2.9 | #2 |
| Xian Lukee Bio-Tech Co., Ltd. (Fruit) | Extract 2 | 86.44 | 9.03 | 18.07 | 10.2 | |
| Fengi Biotech Co., Ltd. | Extract 3 | 37.44 | 30.42 | 3.97 | 63.7 | #1 |
| Phyto PlanetPhyto Planet | Extract 4 | 89.18 | 6.11 | 21.69 | 4.9 | |
| Baoji Oasier Bio-Tech Co., Ltd. | Extract 5 | 87.34 | 5 | 24.77 | 4.1 | #4/5 |
| Xian Lukee Bio-Tech Co., Ltd.(Leaf) | Extract 6 | 86.56 | 4.86 | 24.81 | 4.9 | #3 |
| Longze Biotechnology (Blackberry) | Extract 7 | 85.76 | 9.13 | 16.49 | 11.8 | |
| Xian Xuochang Trade Co., Ltd. | Extract 8 | 87.79 | 5 | 21.64 | 5.4 | #4/5 |

**Claims**

1. An oil-in-water emulsified food composition comprising:

   • Vegetable oil,
   • Water,
   • Extract of *Morus alba* in an amount of 0.01 to 1.5 wt%, expressed as dry weight of extract on weight of total food composition,
   • Acid,

   wherein the extract of *Morus alba* comprises polyphenols in a total amount of from 0.6 to 15 GAE% ("gallic acid equivalent"), preferably of 1 to 15 GAE %, based on the dry weight of the extract,
   wherein the pH of the food composition is from 2.5 to 5.

2. A food composition according to any one of the preceding claims, wherein the extract of *Morus alba* comprises organic acids in a total amount of from 17 to 200 mg/g, based on the dry weight of the extract.

3. A food composition according to claim 1, wherein the extract of *Morus alba* comprises free amino acids in a total amount of more than 3 mg/g, preferably of from 3 to 150 mg/g, based on the dry weight of the extract.

4. A food composition according to any one of the preceding claims, wherein the extract of *Morus alba* comprises citric acid and salts thereof in an amount of more than 20 wt%, preferably of from 65 to 85 wt%, based on the weight of total organic acids in the extract.

5. A food composition according to any one of the preceding claims, wherein the extract of *Morus alba,* 0.1% dilution in water, has a color **characterized by** the L*a*b* values wherein the L* value is more than 80, preferably of from 80 to 92 and b* is preferably more than 1.

6. A food composition according to any one of the preceding claims, wherein the vegetable oil is present in an amount of from 5 to 85 wt%, preferably in an amount of from 10 to 80 preferably 10 to 78wt%, more preferably in an amount of from 20 to 70 wt%.

7. A food composition according to any one of the preceding claims wherein the composition further comprises an oil-in-water emulsifier, preferably egg yolk.

8. A food composition according to any one of the preceding claims, wherein the food product is an emulsified sauce or a dressing, preferably mayonnaise, salad dressing or vinaigrette, most preferably mayonnaise or salad dressing.

9. A food composition according to any one of the preceding claims wherein the level of ethylenediaminetetraacetic acid is lower than 0.008% by weight, preferably lower than 0.005% by weight, preferably lower than 0.002% by weight of the food composition, preferably EDTA is absent from the food composition.

10. A food composition according to any one of the preceding claims wherein the difference in color ΔE between the colour of a composition with and without the *Morus alba* extract, calculated as $\Delta E^* = SQRT(\Delta L^{*2} + \Delta a^{*2} + \Delta b^{*2})$, is of from 0 to 30, more preferably of from 0 to 20, even more preferably of from 0 to 10 and most preferably of from 0 to 5.

11. Method to prepare a food product according to any one of the preceding claims, the method comprising the steps of

 a) adding water into a stirred vessel,
 b) adding vegetable oil to the water while stirring to create a mixture;
 c) combining acid and from 0.01 to 1.5 wt% (expressed as dry weight of the extract based on weight of final resulting composition) of extract of *Morus alba* with the water in step a), or with the mixture during step b), wherein the extract of *Morus alba* comprises polyphenols in a total amount of from 0.6 to 15 GAE%, preferably of 1 to 15 GAE %, based on the dry weight of the extract,
 d) homogenising the mixture resulting from step b),

 to create an oil-in-water emulsion.

12. Method according to claim 11, wherein in step a) egg yolk is added to the water.

13. Method according to claim 11 or 12, wherein the extract of *Morus alba* has a water content of less than 15 wt.%, more preferably of less than 10 wt.% and most preferably of less than 8 wt.%.

14. Use of an extract of *Morus alba* in an amount of from 0.1 to 0.5 wt% in oil-in-water emulsions comprising vegetable oil, water and acid, to reduce oxidation, wherein the *Morus alba* extract comprises total polyphenols in a total amount of from 0.6 to 15 GAE%, preferably from 2 to 4 GAE%, based on the dry weight of the extract.

15. Use according to claim 14, wherein the color of the oil-in-water emulsion has a color **characterized by** the L*a*b* values wherein the difference in color ΔE* between the emulsion comprising the *Morus alba* extract and the emulsion without the extract, calculated as $\Delta E^* = SQRT(\Delta L^{*2} + \Delta a^{*2} + \Delta b^{*2})$, is from 0 to 30.

**Patentansprüche**

1. Emulgierte Öl-in-Wasser-Nahrungsmittelzusammensetzung, umfassend:

 • pflanzliches Öl,
 • Wasser,
 • Extrakt von Morus alba in einer Menge von 0,01 bis 1,5 Gew.-%, ausgedrückt als Trockengewicht des Extrakts bezogen auf das Gewicht der gesamten Nahrungsmittelzusammensetzung,
 • Säure,

 wobei der Extrakt von Morus alba Polyphenole in einer Gesamtmenge von 0,6 bis 15 GAE-% ("Gallensäureäquivalent"), bevorzugt 1 bis 15 GAE-%, bezogen auf das Trockengewicht des Extrakts, enthält,
 wobei der pH-Wert der Nahrungsmittelzusammensetzung 2,5 bis 5 beträgt.

2. Nahrungsmittelzusammensetzung nach irgendeinem der vorhergehenden Ansprüche, wobei der Extrakt von Morus alba organische Säuren in einer Gesamtmenge von 17 bis 200 mg/g, bezogen auf das Trockengewicht des Extrakts, umfasst.

3. Nahrungsmittelzusammensetzung nach Anspruch 1, wobei der Extrakt von Morus alba freie Aminosäuren in einer Gesamtmenge von mehr als 3 mg/g, bevorzugt von 3 bis 150 mg/g, bezogen auf das Trockengewicht des Extraktes, enthält.

4. Nahrungsmittelzusammensetzung nach irgendeinem der vorhergehenden Ansprüche, wobei der Extrakt von Morus alba Citronensäure und Salze davon in einer Menge von mehr als 20 Gew.-%, bevorzugt von 65 bis 85 Gew.-%, bezogen auf das Gesamtgewicht der organischen Säuren im Extrakt, enthält.

**5.** Nahrungsmittelzusammensetzung nach irgendeinem der vorhergehenden Ansprüche, wobei der Extrakt von Morus alba, 0,1 % Verdünnung in Wasser, eine Farbe aufweist, die durch die L*a*b*-Werte gekennzeichnet ist, wobei der L*-Wert mehr als 80, bevorzugt von 80 bis 92, beträgt und b* bevorzugt mehr als 1 beträgt.

**6.** Nahrungsmittelzusammensetzung nach irgendeinem der vorhergehenden Ansprüche, wobei das pflanzliche Öl in einer Menge von 5 bis 85 Gew. %, bevorzugt in einer Menge von 10 bis 80, bevorzugt 10 bis 78 Gew. %, bevorzugter in einer Menge von 20 bis 70 Gew.-% vorhanden ist.

**7.** Nahrungsmittelzusammensetzung nach irgendeinem der vorhergehenden Ansprüche, wobei die Zusammensetzung ferner einen Öl-in-Wasser-Emulgator, bevorzugt Eigelb, umfasst.

**8.** Nahrungsmittelzusammensetzung nach irgendeinem der vorhergehenden Ansprüche, wobei das Nahrungsmittelprodukt eine emulgierte Soße oder ein Dressing, bevorzugt Mayonnaise, Salatdressing oder Vinaigrette, am meisten bevorzugt Mayonnaise oder Salatdressing, ist.

**9.** Nahrungsmittelzusammensetzung nach irgendeinem der vorhergehenden Ansprüche, wobei der Gehalt an Ethylendiamintetraessigsäure weniger als 0,008 Gewichts-%, bevorzugt weniger als 0,005 Gewichts-%, bevorzugt weniger als 0,002 Gewichts-%, der Nahrungsmittelzusammensetzung beträgt, wobei EDTA in die Nahrungsmittelzusammensetzung bevorzugt nicht vorhanden ist.

**10.** Nahrungsmittelzusammensetzung nach irgendeinem der vorhergehenden Ansprüche, wobei der Farbunterschied ΔE zwischen der Farbe einer Zusammensetzung mit und ohne dem Morus alba-Extrakt, berechnet als $\Delta E^* = SQRT(\Delta L^{*2} + \Delta a^{*2} + \Delta b^{*2})$, von 0 bis 30, bevorzugter von 0 bis 20, noch bevorzugter von 0 bis 10 und am meisten bevorzugt von 0 bis 5, beträgt.

**11.** Verfahren zur Herstellung eines Nahrungsmittelprodukts nach irgendeinem der vorhergehenden Ansprüche, wobei das Verfahren die folgenden Schritte umfasst:

a) Zugabe von Wasser in einen Rührbehälter,
b) Zugabe von pflanzlichem Öl zu dem Wasser unter Rühren, um eine Mischung zu erzeugen;
c) Kombinieren von Säure und 0,01 bis 1,5 Gew.-% (ausgedrückt als Trockengewicht des Extrakts bezogen auf das Gewicht der sich ergebenden Endzusammensetzung) des Extrakts von Morus alba mit dem Wasser in Schritt a) oder mit der Mischung während Schritt b), wobei der Extrakt von Morus alba Polyphenole in einer Gesamtmenge von 0,6 bis 15 GAE-%, bevorzugt von 1 bis 15 GAE-%, bezogen auf das Trockengewicht des Extrakts, enthält,
d) Homogenisieren der sich aus Schritt b) ergebenden Mischung,

um eine Öl-in-Wasser-Emulsion herzustellen.

**12.** Verfahren nach Anspruch 11 , wobei in Schritt a) dem Wasser Eigelb zugesetzt wird.

**13.** Verfahren nach Anspruch 11 oder 12, wobei der Extrakt von Morus alba einen Wassergehalt von weniger als 15 Gew.-%, bevorzugter von weniger als 10 Gew.-% und am meisten bevorzugt von weniger als 8 Gew.-% aufweist.

**14.** Verwendung eines Extrakts von Morus alba in einer Menge von 0,1 bis 0,5 Gew.-% in Öl-in-Wasser-Emulsionen, die pflanzliches Öl, Wasser und Säure umfassen, um die Oxidation zu reduzieren, wobei der Morus alba-Extrakt Gesamtpolyphenole in einer Gesamtmenge von 0,6 bis 15 GAE-%, bevorzugt 2 bis 4 GAE-%, bezogen auf das Trockengewicht des Extrakts, enthält.

**15.** Verwendung nach Anspruch 14, wobei die Farbe der Öl-in-Wasser-Emulsion eine Farbe aufweist, die durch die L*a*b*-Werte gekennzeichnet ist, wobei der Farbunterschied ΔE* zwischen der Emulsion, die den Morus alba-Extrakt umfasst, und der Emulsion ohne den Extrakt, berechnet als $\Delta E^* = SQRT(\Delta L^{*2} + \Delta a^{*2} + \Delta b^{*2})$, bei 0 bis 30 liegt.

**Revendications**

**1.** Composition alimentaire émulsionnée huile-dans-eau comprenant :

• une huile végétale,
• de l'eau,
• un extrait de *Morus alba* dans une quantité de 0,01 à 1,5 % en masse, exprimée comme masse sèche d'extrait sur masse de composition alimentaire totale,
• un acide,

dans laquelle l'extrait de *Morus alba* comprend des polyphénols dans une quantité totale de 0,6 à 15 % GAE ("équivalent acide gallique"), de préférence de 1 à 15 % GAE, sur la base de la masse sèche de l'extrait,
dans laquelle le pH de la composition alimentaire est de 2,5 à 5.

2. Composition alimentaire selon l'une quelconque des revendications précédentes, dans laquelle l'extrait de *Morus alba* comprend des acides organiques dans une quantité totale de 17 à 200 mg/g, sur la base de la masse sèche de l'extrait.

3. Composition alimentaire selon la revendication 1, dans laquelle l'extrait de *Morus alba* comprend des acides aminés libres dans une quantité totale supérieure à 3 mg/g, de préférence de 3 à 150 mg/g, sur la base de la masse sèche de l'extrait.

4. Composition alimentaire selon l'une quelconque des revendications précédentes, dans laquelle l'extrait de *Morus alba* comprend de l'acide citrique et des sels de celui-ci dans une quantité supérieure à 20 % en masse, de préférence de 65 à 85 % en masse, sur la base de la masse de tous les acides organiques dans l'extrait.

5. Composition alimentaire selon l'une quelconque des revendications précédentes, dans laquelle l'extrait de *Morus alba,* dilution à 0,1 % dans de l'eau, présente une couleur **caractérisée par** les valeurs L*a*b* dans laquelle la valeur L* est supérieure à 80, de préférence de 80 à 92 et b* est de préférence supérieur à 1.

6. Composition alimentaire selon l'une quelconque des revendications précédentes, dans laquelle l'huile végétale est présente dans une quantité de 5 à 85 % en masse, de préférence dans une quantité de 10 à 80, de préférence de 10 à 78 % en masse, encore mieux dans une quantité de 20 à 70 % en masse.

7. Composition alimentaire selon l'une quelconque des revendications précédentes, dans laquelle la composition comprend de plus un émulsionnant huile-dans-eau, de préférence du jaune d'œuf.

8. Composition alimentaire selon l'une quelconque des revendications précédentes, dans laquelle le produit alimentaire est une sauce émulsionnée ou un assaisonnement, de préférence de la mayonnaise, un assaisonnement de salade ou une vinaigrette, encore mieux de la mayonnaise ou un assaisonnement de salade.

9. Composition alimentaire selon l'une quelconque des revendications précédentes, dans laquelle la teneur en acide éthylènediaminetétraacétique est inférieure à 0,008 % en masse, de préférence inférieure à 0,005 % en masse, encore mieux inférieure à 0,002 % en masse de la composition alimentaire, de préférence EDTA est absent de la composition alimentaire.

10. Composition alimentaire selon l'une quelconque des revendications précédentes, dans laquelle la différence de couleur ΔE entre la couleur d'une composition avec et sans extrait de *Morus alba,* calculée par $\Delta E^* = SQRT(\Delta L^{*2} + \Delta a^{*2} + \Delta b^{*2})$, est de 0 à 30, encore mieux de 0 à 20, bien mieux encore de 0 à 10 et particulièrement de préférence de 0 à 5.

11. Procédé de préparation d'un produit alimentaire selon l'une quelconque des revendications précédentes, le procédé comprenant les étapes de

a) addition d'eau dans une cuve agitée,
b) addition d'huile végétale à l'eau tout en agitant pour créer un mélange ;
c) combinaison d'acide et de 0,01 à 1,5 % en masse (exprimée comme masse sèche de l'extrait sur la base de la masse de composition résultante finale) d'extrait de *Morus alba* avec l'eau dans l'étape a), ou avec le mélange pendant l'étape b), dans lequel l'extrait de *Morus alba* comprend des polyphénols dans une quantité totale de 0,6 à 15 % GAE, de préférence de 1 à 15 % GAE, sur la base de la masse sèche de l'extrait,
d) homogénéisation du mélange résultant de l'étape b),

pour créer une émulsion huile-dans-eau.

**12.** Procédé selon la revendication 11, dans lequel dans l'étape a) du jaune d'œuf est ajouté à l'eau.

**13.** Procédé selon la revendication 11 ou 12, dans lequel l'extrait de *Morus alba* présente une teneur en eau inférieure à 15 % en masse, encore mieux inférieure à 10 % en masse et bien mieux encore inférieure à 8 % en masse.

**14.** Utilisation d'un extrait de *Morus alba* dans une quantité de 0,1 à 0,5 % en masse dans des émulsions huile-dans-eau comprenant une huile végétale, de l'eau et un acide, pour réduire l'oxydation, dans laquelle l'extrait de *Morus alba* comprend un total de polyphénols dans une quantité totale de 0,6 à 15 % GAE, de préférence de 2 à 4 % GAE, sur la base de la masse sèche de l'extrait.

**15.** Utilisation selon la revendication 14, dans laquelle la couleur de l'émulsion huile-dans-eau présente une couleur **caractérisée par** les valeurs L*a*b* dans laquelle la différence de couleur $\Delta E^*$ entre l'émulsion comprenant l'extrait de *Morus alba* et l'émulsion sans l'extrait, calculée par $\Delta E^* = SQRT(\Delta L^{*2} + \Delta a^{*2} + \Delta b^{*2})$, est de 0 à 30.

FIG 1.

**FIG. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017001154 A
- KR 20110119982
- KR 20110072769

**Non-patent literature cited in the description**

- **LEE et al.** *Korean J. Food Nutr.,* 2014, vol. 27 (6), 1132-1140
- *Journal of functional foods,* 2015, vol. 18, 1039-1046
- *Food chemistry,* 1999, vol. 64, 555-559
- **KHAN et al.** *BMC research notes,* 2013, vol. 6, 24
- *Kew Plant List,* August 2015
- **V.L. SINGLETON et al.** Analysis of total phenols and other oxidation substrates and antioxidants by means of Folin-Ciocalteu reagent. *Methods in Enzymology,* 1999, vol. 299, 152-178
- **M. ALDERLIESTEN.** *Particle & Particle Systems Characterization,* 1991, vol. 8, 237-241